# EUROPÄISCHE PATENTSCHRIFT

(11) **EP 0 724 983 B1**
(45) Veröffentlichungstag und Bekanntmachung des Hinweises auf die Patenterteilung: **18.11.1998**
(21) Anmeldenummer: 96101127.7
(22) Anmeldetag: 26.01.1996
(51) Int. Cl.: B60R 16/02

(54) **Sicherheitsvorrichtung für eine Stromleitung in Kraftfahrzeugen**
Safety device for electrical cable in vehicles
Dispositif de sécurité pour un cable électrique dans des véhicules

(30) Priorität: 06.02.1995 DE 19503808
(43) Veröffentlichungstag der Anmeldung: 07.08.1996
(73) Patentinhaber: Bayerische Motoren Werke Aktiengesellschaft, 80788 München (DE)
(72) Erfinder: Albiez, Robert, D-85084 Reichertshofen (DE); Groebmair, Max, D-83623 Dietramszell (DE); Krappel, Alfred, D-85737 Ismaning (DE)

(56) Entgegenhaltungen:
- EP-A- 0 617 498
- DE-A- 1 463 456
- DE-A- 3 419 145
- US-A- 3 889 248

## Beschreibung

Die Erfindung bezieht sich auf eine Sicherheitsvorrichtung nach dem Oberbegriff des Patentanspruchs 1.

Eine derartige Sicherheitsvorrichtung ist aus der DE 44 13 847 A1 bekannt. Die Sprengkapsel wird dabei durch eine Auswerteschaltung gezündet, die das Ausgangssignal eines Unfallsensors empfängt. Der Unfallsensor spricht beispielsweise auf Verformungen, abnorme Bewegungsabläufe oder starke Verzögerungen des Kraftfahrzeugs an.

Eine entsprechende Sicherheitsvorrichtung ist ferner aus der DE 41 10 240 C1 bekannt. Dort wird der Stromfluß durch die Stromleitung selbst gemessen und über eine nachgeschaltete Auswerteeinrichtung mit einem Schwellwert verglichen. Wird dieser Schwellwert überschritten, so wird die Sprengkapsel gezündet und die Leitung unterbrochen.

Beide bekannte Vorrichtungen verwenden eine separate Sensorik und eine davon beaufschlagte Auswerteelektronik. Bei einem schweren Unfall kann die Auswerteelektronik selbst beschädigt werden und nicht mehr in der Lage sein, die Sprengkapsel zu zünden. Diesem Problem wird bei der DE 41 10 240 C1 dadurch Rechnung getragen, daß ein Energiespeichermittel in Form eines hochkapazitiven Kondensators vorgesehen ist, der einen Mehraufwand darstellt und Mehrkosten verursacht. Zudem ist diese Vorrichtung beim Anlassen einer Brennkraftmaschine eingeschränkt wirksam, da der betriebsbedingt maximale Stromfluß, wie er beim Anlassen auftritt, in etwa vergleichbar ist mit dem Stromfluß, wie er bei einem Unfall auftreten kann und demzufolge diese Vorrichtung beim Anlassen unwirksam gemacht wird.

Ähnliches liegt bei der DE 44 13 847 A1 vor. Da durch den Unfallsensor nur indirekt auf die tatsächliche Notwendigkeit geschlossen wird, die Sicherheitsvorrichtung wirksam werden zu lassen, können sich Fehlauslösungen bzw. auch Nichtauslösungen dann, wenn dies aufgrund einer tatsächlichen Beschädigung der Stromleitung erforderlich wäre, ergeben.

Der Erfindung liegt die Aufgabe zugrunde, eine Sicherheitsvorrichtung der eingangs genannten Art Zu schaffen, die sich durch einen einfachen Aufbau und eine hohe Wirksamkeit auszeichnet.

Die Erfindung löst diese Aufgabe durch die kennzeichnenden Merkmale des Patentanspruchs 1.

Die Steuerung für die Auslösung der Sicherheitsvorrichtung hängt nun unmittelbar von der mechanischen Beanspruchung der Stromleitung, d.h. des zu schützenden Bauteils selbst ab. Nur wenn diese Beanspruchung ein kritisches Maß überschreitet, wird die Sicherheitsvorrichtung ausgelöst. Eine irgendwie geartete Sensorik, mit der indirekt auf diese Beanspruchung geschlossen wird, ist ebenso nicht erforderlich wie eine partielle naturgemäß erforderliche Außerbetriebsetzung der Sicherheitsvorrichtung bei einer hohen elektrischen Belastung der Stromleitung.

Die Ausgestaltung der Erfindung ist auf verschiedene Weise möglich. Mögliche Variationen beziehen sich einerseits auf die konstruktive Ausgestaltung der Masseverbindung und auf die elektrische Ausführung der Masseverbindung bzw. des hierfür vorgesehenen elektrischen Leiters.

Was die Masseverbindung betrifft, so kann diese durch ein Karosserieteil gebildet sein, das in das Kabel eindringt und dabei mit einer, den eigentlichen elektrischen Leiter umgebenden elektrisch leitfähigen Schicht kontaktiert und somit in dieser Schicht eine Massekontaktierung herstellt. Das Karosserieteil braucht hierzu nicht notwendigerweise gesondert ausgebildet sein. Das tatsächlich die Masseverbindung herstellende Karosserieteil kann auch je nach Art des Unfalls variieren. Die Wirkung hängt lediglich davon ab, welches Karosserieteil bei einem Unfall verformt wird und in das Kabel (elektrische Leitung) eindringt. Da bei einem Unfall durch die Verformung des Karosserieteils darauf angebrachte isolierende Lackschichten oder dgl. mit Sicherheit zerstört werden und das blanke Blech offen zu Tage tritt, ist damit noch eine Sicherheit der Auslösung im Bedarfsfall gewährleistet, während gleichzeitig durch die normalerweise bestehende Lackschicht eine Sicherheit vor Fehlauslösung besteht.

Die Masseverbindung kann auch durch einen separaten Masseleiter gebildet sein, der elektrisch isoliert und in räumlichem Abstand von einer den eigentlichen elektrischen Leiter umgebenden elektrisch leitfähigen Schicht verläuft. Ein in das Kabel (elektrischer Leiter) eindringendes Bauteil des Kraftfahrzeugs verbindet damit den Masseleiter mit der, dem eigentlichen elektrischen Leiter umgebenden elektrisch leitfähigen Schicht und schließt damit den Zündkreis durch die Sprengkapsel. Diese Ausführung bietet den Vorteil, das auch elektrisch isolierende Bauteile die Sprengkapsel auslösen können.

Die Ausführung des elektrischen Leiters kann in Form einer Litze bestehen, die die Stromleitung umgibt. Eine Litze kann von der Stromleitung auch elektrisch isoliert sein, um einen weitgehenden Schutz vor Fehlauslösungen zu erzielen. Allen Ausführungsformen gemeinsam ist auch die Auslösung außerhalb eines Unfallgeschehens, dann, wenn die Stromleitung an Blechkanten oder dgl. durchgescheuert wird.

Anhand der Zeichnung ist die Erfindung weiter erläutert. Es zeigt
- Fig. 1: den Querschnitt einer mit der erfindungsgemäßen Sicherheitsvorrichtung versehenen Stromleitung,

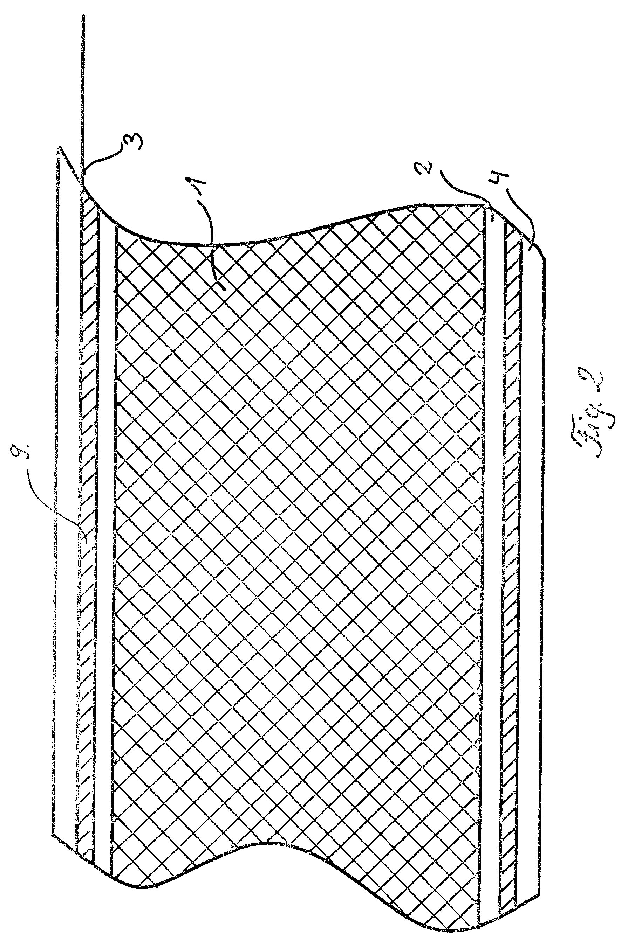

- Fig. 2: einen Längsschnitt zu Fig. 1,

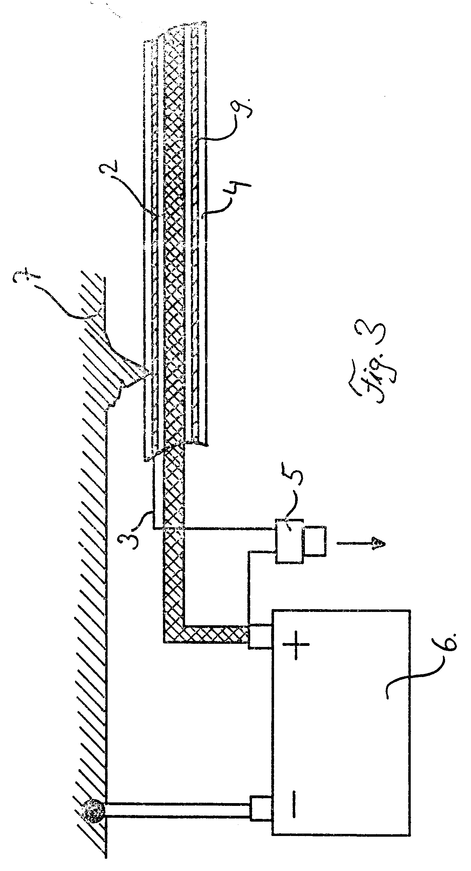

- Fig. 3: das Schaltprinzip zu der Vorrichtung von Fig. 1 und 2 und
- Fig. 4: eine Alternative zur Ausführung von Fig. 1 und 2.

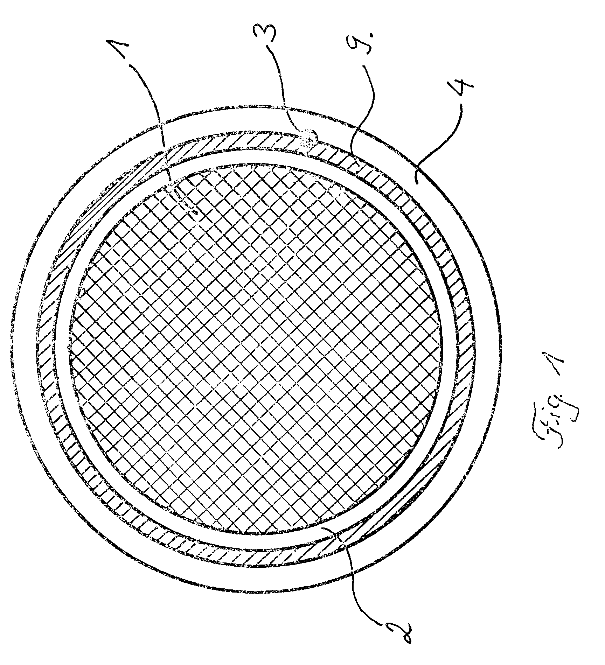

Beim Ausführungsbeispiel von Fig. 1 ist vergrößert eine Stromleitung 1 im Querschnitt gezeigt, die von einer Isolationsschicht 2 umgeben ist. Die Isolationsschicht 2 ist von einer elektrisch leitfähigen Schicht 9, bestehend aus z.B. Drahtgeflecht, gewendelten Draht, leitfähigen Kunststoff umgeben. Die leitfähige Schicht 9 kann mit einer eingearbeiteten Beilauflitze 3 kontaktieren. Dies hat den Vorteil einer einfacheren Kontaktierung der leitfähigen Schicht an den Treibsatz/Zündpille. Die leitfähige Schicht 9, ggf. mit Beilauflitze 3 ist selbst wiederum von einer weiteren Isolationsschicht 4 umgeben. Die Beilauflitze ist elektrisch mit einer Sprengkapsel 5 verbunden, die wiederum am Pluspol eines Bordnetz-Energiespeichers 6 angeschlossen ist. Die Sprengkapsel 5 ist räumlich entfernt oder aber auch in unmittelbarer räumlicher Nähe mit dem Pluspol angeordnet bzw. als in die Batterieklemme integrierte Einheit denkbar.

Bei einer starken mechanischen Beanspruchung des Stromkabels, wie sie typischerweise bei einem Unfall auftritt, wird die Sprengkapsel 5 gezündet, in dem die Beilauflitze 3 auf Masse geschaltet wird. Dieser Schaltvorgang erfolgt automatisch durch das sich bei einem starken Unfall ergebende Geschehen. Dieses ist symbolisch durch ein Karosserieblech 7 dargestellt, das mit einer Spitze bis zu den Stromleiter 1 eindringt. Bei dem Eindringen des Karosserieblechs wird es, bevor es auf den eigentlichen Leiter kommt zur Kontaktierung mit der leitfähigen Schicht 9 kommen und den Massekreis zur Zündpille schließen. Dabei wird der Stromkreis vom Pluspol über die Sprengkapsel 5, die Beilauflitze und das Karosserieblech, das sich auf Masse potential befindet, geschlossen. Hierzu ist keine irgendwie geartete Sensorik erforderlich, da sich die Masseverbindung zwangsläufig ergibt. Anderseits ist bei einem Unfall, der nicht zu einer mechanischen Beanspruchung des Stromkabels 1 führt, sichergestellt, daß dann die Sprengkapsel 5 nicht ausgelöst wird und über das Stromkabel 1 bei und nach einem Unfall zu versorgende elektrische Geräte weiterhin versorgt werden. Nicht dargestellt ist eine im Stromkreis der Sprengkapsel 5 vorgesehene mögliche Verzögerungsschaltung, mit der die Auslösung der Sprengkapsel 5 nach Vervollständigung der Masseverbindung noch für kurze Zeit unterbrochen wird, um die Sprengkapsel 5 zeitlich etwas verzögert nach einem Unfall oder dgl. auszulösen. Dadurch ist es möglich, die Funktion elektrischer Bauteile, wie beispielsweise eines Airbags und dgl. bei einem Unfall sicherzustellen und erst anschließend die Sprengkapsel 5 zu zünden.

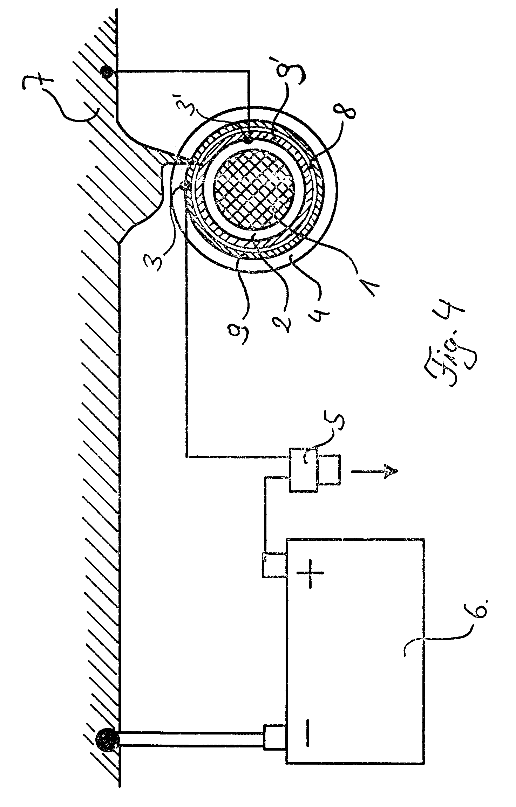

Beim Ausführungsbeispiel von Fig. 4 ist der Stromleiter 1 wiederum mit einer Isolationsschicht 2 versehen. Zwischen der äußeren Isolationsschicht 4 und der inneren Isolationsschicht 2 befinden sich nunmehr zwei elektrisch leitende Schichten 9 und 9' die jeweils mit Beilauflitzen 3 und 3' zur einfacheren Konfektion kontaktiert sein können. Die beiden Schichten 9 und 9' sind durch eine Zwischenisolation 8 elektrisch voneinander getrennt. Die Beilauflitze 3 ist wiederum mit der Sprengkapsel 5 verbunden. Die Beilauflitze 3' ist ständig auf Masse gelegt. Bei einem Unfall kann es vorkommen, daß ein Fahrzeugteil in das Kabel eindringt. Das Fahrzeugteil kann auch elektrisch isoliert sein. Wesentlich ist lediglich, daß es die Zwischenisolation 8 lokal zerstört und damit eine elektrische Verbindung zwischen den beiden Beilauflitzen 3 und 3' bzw. zwischen den beiden elektrisch leitenden Schichten 9 und 9' herstellt. Damit ist der Stromkreis durch die Sprengkapsel 5 geschlossen. Diese zündet und führt in an sich bekannter Weise zu einer Unterbrechung der vom Pluspol des Energiespeichers ausgehenden elektrischen Versorgungsleitung (nicht dargestellt). Die Wirkung der Sprengkapsel 5 an sich bekannt und kann darin bestehen, ein Trennmittel, z.B. ein Messer für die Versorgungsleitung zur Bewegung oder aber auch eine Kontakttrennung für einen in der Versorgungsleitung vorgesehen Zwischenkontakt vorzunehmen.

## Patentansprüche

1. Sicherheitsvorrichtung für eine Stromleitung in Kraftfahrzeugen, mit einer Sprengkapsel, die im Bedarfsfall die Stromleitung unterbricht, dadurch gekennzeichnet, daß die Stromleitung einen elektrischen Leiter aufweist, der einerseits mit dem Versorgungspol des Bordnetz-Energiespeichers und andrerseits mit der Sprengkapsel verbunden ist und daß der Stromfluß durch die Sprengkapsel über eine Masseverbindung herstellbar ist, die bei einer anormalen mechanischen Beanspruchung des Stromleiters besteht.

2. Sicherheitsvorrichtung nach Anspruch 1, dadurch gekennzeichnet, daß die Masseverbindung durch ein Karosserieteil des Kraftfahrzeugs gebildet ist, das in die Stromleitung eindringt.

3. Sicherheitsvorrichtung nach Anspruch 1 oder 2, dadurch gekennzeichnet, daß die Masseverbindung durch ein Massekabel gebildet ist, das elektrisch isoliert und in räumlichem Abstand zum elektrischen Leiter verläuft.

4. Sicherheitsvorrichtung nach einem der Ansprüche 1 bis 3, dadurch gekennzeichnet, daß der elektrische Leiter eine Litze ist, die die Stromleitung umgibt.

5. Sicherheitsvorrichtung nach einem der Ansprüche 1 bis 4, dadurch gekennzeichnet, daß der elektrische Leiter ein Geflecht gewendelter Leiter oder leitfähiger Kunststoff ist, der den Stromleiter umgibt.

## Claims

1. A safety device for an electric circuit in motor vehicles, comprising a detonator which breaks the circuit in an emergency, **characterised in that** the circuit comprises an electric conductor connected at one end to the detonator and at the other end to the supply terminal of the on-board energy storage battery and in that the current can be made to flow through the detonator via an earth connection which is produced by abnormal mechanical stress on the electric circuit.

2. A safety device according to claim 1, **characterised in that** the earth connection is formed by a part of the vehicle body which is pushed into the electric circuit.

3. A safety device according to claim 1 or 2, **characterised in that** the earth connection is in the form of an earth cable which is electrically insulated and spaced apart from the electric conductor.

4. A safety device according to any of claims 1 to 3, **characterised in that** the electric conductor is a stranded wire which surrounds the electric circuit.

5. A safety device according to any of claims 1 to 4, **characterised in that** the electric conductor is a plaited coiled conductor or conductive plastic which surrounds the elecrtric circuit.

## Revendications

1. Dispositif de sécurité pour un câble électrique monté dans un véhicule, comportant une capsule détonante qui interrompt le câble électrique en cas de besoin,
caractérisé en ce que
le câble comprend un conducteur électrique relié d'une part au pôle d'alimentation de l'accumulateur d'énergie du réseau de bord, d'autre part à la capsule détonante, le passage du courant dans cette capsule pouvant être établi par une liaison à la masse apparaissant lorsque le conducteur électrique est soumis à une contrainte mécanique anormale.

2. Dispositif de sécurité selon la revendication 1,
caractérisé en ce que
la liaison à la masse est produite par la pénétration dans le câble d'une pièce de carrosserie du véhicule.

3. Dispositif de sécurité selon l'une des revendications 1 ou 2,
caractérisé en ce que
la liaison à la masse est constituée par un câble de masse isolé électriquement et situé à une certaine distance du conducteur électrique.

4. Dispositif de sécurité selon l'une des revendications 1 à 3,
caractérisé en ce que
le conducteur électrique est une tresse qui entoure le câble.

5. Dispositif de sécurité selon l'une des revendications 1 à 4,
caractérisé en ce que
le conducteur électrique est une nappe constituée de conducteurs enroulés ou d'une matière plastique conductrice, entourant le conducteur.
